# EUROPEAN PATENT APPLICATION

(11) **EP 0 747 525 A2**
(43) Date of publication of application: **11.12.1996**
(21) Application number: 96108633.7
(22) Date of filing: 30.05.1996
(51) Int. Cl.: D06N 7/00

(54) **Recyclable carpet and method of recycling**

(30) Priority: 05.06.1995 US 465235
(71) Applicant: BASF CORPORATION, Mount Olive, New Jersey 08728-1234 (US)
(72) Inventor: Sferrazza, Randall A., Asheville, NC 28804 (US)
(74) Representative: Abel, Manfred

(57) **Abstract**

The present invention relates, in general, to recyclable carpet structures. More specifically, the invention relates to a recyclable carpet structure that includes a primary backing having fiber tufts protruding from a top surface thereof, a substrate, and a hot melt adhesive between the tufted primary backing and the substrate. The invention further relates to a method of recycling such a carpet structure.

## Description

The present invention relates, in general, to recyclable carpet structures. More specifically, the invention relates to a recyclable carpet structure that includes a primary backing having fiber tufts protruding from a top surface thereof, a substrate, and a hot melt adhesive between the tufted primary backing and the substrate. The invention further relates to a method of recycling such a carpet structure.

Tufted carpet structures are composites in which the pile or tuft-forming fiber is needled through a primary backing. A binding agent is applied to the bottom of the primary backing to hold the tufts in place and to secure the tufted primary backing to a substrate.

Methods have been suggested for recycling various types of carpet structures (including tufted structures) and carpet structures produced from various polymer types (including nylon) . In this regard, attention is directed to the disclosures of USP 5,240,530, 5,288,349 and 5,370,757 and 5,169,870.

USP 5,240,530 and USP 5,288,349 disclose a carpet that includes a primary backing having tufts of synthetic fibers protruding from a top surface and a secondary backing with an extruded sheet of isotactic polyolefin polymer between and integrally fused to a bottom surface of the primary backing and an upper surface of the secondary backing. The recycling method described includes collecting portions of the carpet, grinding the portions and washing same to separate the various fibers.

USP 5,370,757 teaches a process of manufacturing substantially 100% nylon 6 carpet that includes binding a face yarn of nylon 6 to a support of nylon 6 with molten or dissolved nylon 6. Carpet so constructed is more readily recycled than carpets formed of composites of several different materials.

USP 5,169,870 relates to nylon 6 carpet specifically and to a method of reclaiming ε-caprolactam therefrom.

The following patents relate to various other aspects of carpet reclamation: USPs 5,230,473, 5,233,021 and 5,294,384.

The present invention provides a recyclable carpet produced from, for example, two different polymer types. The two types are used, for example, in the primary backing and tufts on the one hand, and the substrate on the other. The backing and substrate are secured together with a hot melt adhesive that has a melt temperature lower than either the backing- or substrate-forming material. The invention also provides a method of recycling such a carpet which takes advantage of the differential melt temperatures of the polymers and the adhesive. The carpet and recycling method of the invention are particularly well suited for use in connection with carpet tile structures

It is an object of the invention to provide a recyclable carpet, including a tufted carpet comprising nylon as one component.

It is a further object of the invention to provide a method of recycling carpet and, particularly, to a method of reclaiming the nylon component from nylon-containing tufted carpets.

In accordance with the foregoing objectives, the present invention relates to a tufted carpet comprising:
i) a tufted primary backing comprising tufts of carpet fibers protruding from a top surface of a primary backing,
ii) a substrate, and
iii) a hot melt adhesive between a bottom surface of the primary backing and a top surface of the substrate. In the carpet of the invention, the tufts of fibers and the primary backing comprise a first polymer and the substrate comprises a second polymer, which first and second polymers can be the same or different. The hot melt adhesive is selected so as to be compatible with both the first and second polymers and to have a lower melt temperature than the first or second polymers.

The present invention also relates to a method of recycling the above-described carpet. The method comprises: i) heating the carpet to a temperature sufficient to soften the hot melt adhesive but below the melt temperatures of the first and second polymers, and ii) separating the tufted primary backing from the substrate.

Further objects and advantages of the invention will be clear from a reading of the description that follows.

Figure 1 is a cross-sectional view of one embodiment of the carpet of the present invention. The Figure shows a primary backing having fiber tufts needled therethrough and protruding from a top surface. The Figure also shows a hot melt adhesive between a bottom surface of the primary backing and a top surface of the substrate.

Figure 2 is a side view of an apparatus suitable for use in recycling the carpet illustrated in Figure 1.

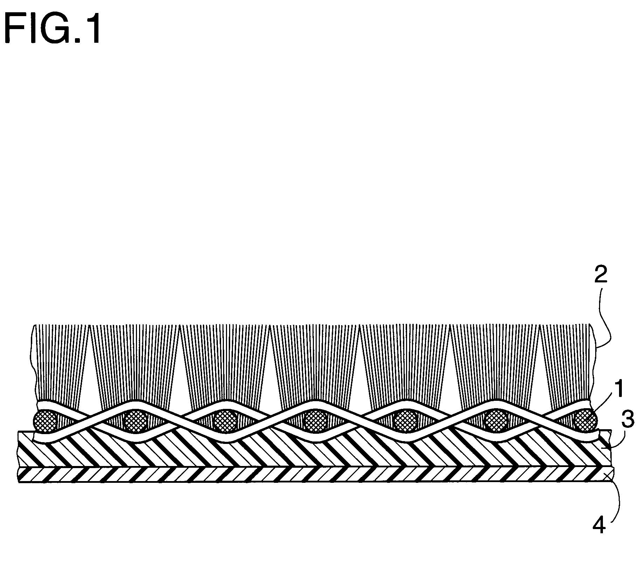

The present invention relates to recyclable carpet structures and methods of recycling same. Referring to Figure 1, there is shown a carpet structure of the invention comprising a primary backing (1) that is made of woven fibers. Tufts of carpet face fibers (2) protrude from a top face of primary backing (1) and a thin film of a hot melt adhesive (3) locks the tufts (2) in place. The hot melt adhesive (3) acts as a buffer between the tufted primary backing (1) and a thermoplastic substrate (4) and secures the tufted primary backing (1) to the thermoplastic substrate (4).

The face fiber tufts and primary backing of the carpet of the invention are formed of the same polymeric material. The substrate is formed of a polymer that can be different from that from which the fiber tufts and primary backing are formed. The hot melt adhesive applied to the back surface of the primary backing to lock the tufts in place and to act as a buffer between the tufted primary backing and the thermoplastic substrate is compatible with the polymers of the tufts, backing and substrate, and has a melt temperature lower than the backing and/or substrate polymers.

Suitable polymers for the fiber tufts and primary backing of the carpet of the invention include nylons (eg nylon 6 and nylon 66), polypropylene and polyesters. Nylon 6 is preferred. The primary backing can take the form, for example, of a woven tape (eg a tape such as those currently used in primary backings), a knit fabric (as described in DE 41 11455 (Nordfaser)), or a nonwoven fabric such as those used in automotive carpet. Films or webs can also be used.

Suitable substrate polymers include thermoplastics, for example, polyolefins, ethylene vinyl acetate (EVA), and polyvinyl chloride (PVC). The substrate can be applied, for example, as a hot-melt or in a solvent carrier (eg for EVA and PVC). The polyolefins can be a fiber but can also be applied as a hot-melt or solvent applied.

The hot melt adhesive applied to the bottom side of the primary backing and the top side of the substrate is selected so as to be compatible with the polymers of the tufted primary backing and the substrate. Advantageously, the adhesive is caprolactam based copolyamide. Compatible polyolefins and copolyester adhesives can also be used. Examples of suitable adhesives include the Griltex series from Ems and the Vestamelt series from Hüls. The hot melt coating can be applied to the primary backing using various methods of adhesive application, including those described in USP 5,240,530.

The carpet of the present invention can be recycled by heating the carpet to a temperature above the softening point of the hot melt adhesive, but below the melting point of the polymers of the tufted primary backing and substrate. This softening of the hot melt adhesive allows the carpet to be split into the two polymer components.

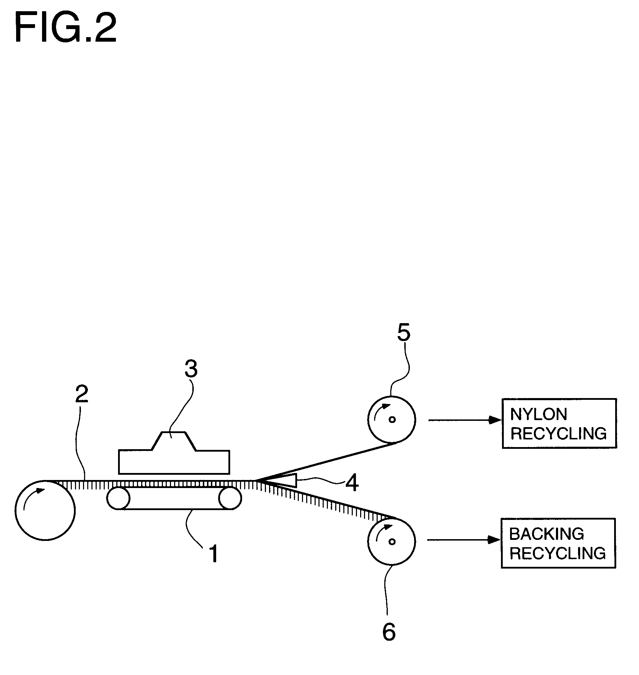

One embodiment for separating the carpet into its two components, shown in Figure 2, involves a two stage process on a moving conveyor belt (1). In the first stage, carpet (2) is heated via heater (3). Heating can be effected using infrared heaters, a heated roll, steam injection, microwave radiation and the like. The temperature to which carpet (2) is heated is sufficient to soften the hot melt adhesive but not sufficient to melt the tuft/primary backing and substrate polymers. In the second stage, a splitter (4) (which can be heated) separates the carpet components which can then be separately wound on winders (5) and (6).

An alternative recycling embodiment involves mechanically gripping the fiber tufts prior to carpet heating. Upon heating of the carpet to the hot melt adhesive softening point, the substrate component simply drops off under its own weight and into a recovery area.

Regardless of the technique used for separating the carpet into its two polymer components, the tufted fabric can be recycled, for example, into a recycled resin by cutting and pelletizing or, where economical, by depolymerization in accordance with known techniques. The substrate can, for example, be chopped and recycled back to the substrate or used as a recycled resin.

All documents cited above are hereby incorporated in their entirety by reference.

One skilled in the art will appreciate from a reading of this disclosure that various changes in form and detail can be made without departing from the true scope of the invention.

## Claims

1. A tufted carpet comprising:
i) a tufted primary backing comprising tufts of carpet fibers protruding from a top surface of a primary backing,
ii) a substrate, and
iii) a hot melt adhesive between a bottom surface of said primary backing and a top surface of said substrate,
wherein said tufts of fibers and said primary backing comprise a first polymer and said substrate comprises a second polymer and wherein said hot melt adhesive is compatible with both said first and second polymers and wherein said hot melt adhesive has a melt temperature lower than melt temperatures of said first and second polymers.

2. The carpet according to claim 1 wherein said first polymer is a nylon.

3. The carpet according to claim 2 wherein said nylon is nylon 6 or nylon 66.

4. The carpet according to claim 2 wherein said hot melt adhesive is a caprolactam based copolyamide.

5. The carpet according to claim 3 wherein said nylon is nylon 66.

6. The carpet according to claim 5 wherein said hot melt adhesive is a hexamethylenediamine and adipic acid based copolyamide.

7. The carpet according to claim 1 wherein said first polymer is polypropylene and said hot melt adhesive is a polyolefin.

8. The carpet according to claim 1 wherein said first polymer is a polyester and said hot melt adhesive is a copolyester.

9. The carpet according to claim 1 wherein said second polymer is a thermoplastic.

10. The carpet according to claim 9 wherein said thermoplastic is polyvinyl chloride.

11. The carpet according to claim 1 wherein said first and second polymers are different.

12. A method of recycling the carpet according to claim 1 comprising heating said carpet to a temperature sufficient to soften said hot melt adhesive and below melt temperatures of said first and second polymers, and separating said tufted primary backing from said substrate.
